# EUROPÄISCHE PATENTSCHRIFT

(11) **EP 1 165 680 B1**
(45) Veröffentlichungstag und Bekanntmachung des Hinweises auf die Patenterteilung: **26.07.2006**
(21) Anmeldenummer: 00925112.5
(22) Anmeldetag: 14.03.2000
(51) Int. Cl.: C08K 5/523, C08L 69/00, C08L 51/04, C08L 55/02, C08L 25/12

(54) **FLAMMWIDRIGE, SCHLAGZÄHMODIFIZIERTE POLYCARBONAT-FORMMASSEN**
FLAME-RESISTANT, IMPACT-RESISTANT MODIFIED POLYCARBONATE MOLDING AND EXTRUSION MASSES
MATIERES MOULABLES POLYCARBONATEES, RESISTANT A LA FLAMME ET DONT LA RESILIENCE EST MODIFIEE

(30) Priorität: 27.03.1999 DE 19914139
(43) Veröffentlichungstag der Anmeldung: 02.01.2002
(73) Patentinhaber: Bayer MaterialScience AG, 51368 Leverkusen (DE)
(72) Erfinder: ECKEL, Thomas, D-41540 Dormagen (DE); ZOBEL, Michael, D-40547 Düsseldorf (DE); WITTMANN, Dieter, D-51375 Leverkusen (DE); DERR, Torsten, D-41542 Dormagen (DE); ÖLLER, Manfred, D-47809 Krefeld (DE)
(86) Internationale Anmeldenummer: PCT/EP2000/002241
(87) Internationale Veröffentlichungsnummer: WO 2000/058394

(56) Entgegenhaltungen:
- EP-A- 0 522 397
- EP-A- 0 611 798
- EP-A- 0 816 434
- EP-A- 0 936 243
- WO-A-96/27600
- DE-A- 19 734 661
- DE-A- 19 853 108
- FR-A- 2 781 807
- US-A- 5 864 004
- BRIGHT ET AL: "aromatic oligomeric phosphates" ANNU. TECH. CONF.-SOC. PLAST. ENG., Bd. 56, Nr. 3, 26. April 1998 (1998-04-26), Seiten 2875-2879-9, XP002101625

## Beschreibung

Die vorliegende Erfindung betrifft flammwidrige mit Pfropfpolymerisat modifizierte Polycarbonat-Formmassen, enthaltend Phosphat-Verbindungen, die einen ausgezeichneten Flammschutz, sehr gute mechanische Eigenschaften, und eine hohe Wärmeformbeständigkeit aufweisen.

Diphosphate sind als Flammschutzadditive bekannt. In JA 59 202 240 wird die Herstellung eines solchen Produktes aus Phosphoroxichlorid, Diphenolen wie Hydrochinon oder Bisphenol A und Monophenolen wie Phenol oder Kresol beschrieben. Diese Diphosphate können in Polyamid oder Polycarbonat als Flammschutzmittel eingesetzt werden. In dieser Literaturstelle findet sich jedoch kein Hinweis auf eine verbesserte Wärmeformbeständigkeit durch Zusatz des oligomeren Phosphats zu Polycarbonat-Formmassen.

EP-0 363 608 beschreibt flammwidrige Polymermischungen aus aromatischem Polycarbonat, styrolhaltigem Copolymer oder Pfropfcopolymer sowie oligomeren Phosphaten als Flammschutzmittel.

In EP-A 0 767 204 werden flammwidrige Polyphenylenoxid- (PPO)- bzw. Polycarbonat-Mischungen beschrieben, die eine Mischung aus Oligophosphaten (Typ Bisphenol A (BPA)-Oligophosphat) und Monophosphaten als Flammschutzmittel enthalten. Hohe Gehalte an Flammschutzmittel führen zu nachteiligen mechanischen Eigenschaften und reduzierter Wärmeformbeständigkeit.

EP-A 0 611 798 und WO 96/27600 beschreiben Formmassen, die neben Polycarbonat oligomere, endständig alkylierte Phosphorsäureester vom BPA-Typ enthalten. Aufgrund der Alkylierung sind zur Erzielung eines wirksamen Flammschutzes hohe Anteile notwendig, was für viele anwendungstechnische Eigenschaften (Mechanik, Wärmeformbeständigkeit) sehr nachteilig ist.

In EP-A 0 754 531 werden verstärkte PC/ABS-Formmassen beschrieben, die für Präzisionsteile geeignet sind. Als Flammschutzmittel werden unter anderem auch Oligophosphate des BPA-Typs verwendet. Die hohen Füllstoffanteile wirken sich sehr nachteilig auf die mechanischen Eigenschaften aus.

EP-A 771 851 beschreibt Formmassen, die aromatisches Polycarbonat, Pfropfpolymer auf Basis von Dien-Kautschuk,SAN-Copolymer, ein Phosphat und Tetrafluorethylen-Polymere enthalten, wobei das Polycarbonat unterschiedliche Molekulargewichte hat. Als Vorteil wird Beständigkeit gegen Schlagzähigkeitsverlust, gegen Hitze und Feuchtigkeit offenbart.

In EP-A 755 977 werden Polymermiscungen aus aromatischem Polycarbonat, Pfropfcopolymer mit einem Kautschukgehalt < 25 % sowie oligomeren Phosphaten mit Füllgehalt < 8 % und einem N-Wert von N = 1 - 35 als Flammschutzadditive beschrieben. In der Literaturstelle findet sich kein Hinweis auf die Verarbeitbarkeit bei höheren Füllgraden und die Fließnahtfestigkeit. Außerdem sind durch die Begrenzung des Anteiles von Phosphaten Nachteile im Flammschutz zu erwarten.

EP-A 747 424 beschreibt thermoplastische Harze, die Phosphatverbindungen mit einem Molekulargewicht von ungefähr 500 bis 2 000 und Phosphatverbindungen mit einem Molekulargewicht von ungefähr 2 300 bis 11 000 als Flammschutzmittel enthalten, wobei eine Vielzahl von thermoplastischen Harzen aufgezählt werden. Durch die hohen Molekulargewichte der Phosphorverbindungen wird das Fließverhalten der Formmassen deutlich beeinträchtigt.

Aufgabe der vorliegenden Erfindung ist es, flammgeschützte mit Pfropfpolymerisat modifizierte PC-Formmassen bereitzustellen, welche sich durch sehr gute mechanische Eigenschaften, eine hohe Wärmeformbeständigkeit und geringe Nachbrennzeit im Brandverhalten auszeichnen und wodurch diese Formmassen für die Herstellung von Gehäuseteilen mit komplizierter Geometrie geeignet sind.

Es wurde nun gefunden, daß mit Pfropfpolymerisat modifizierte Polycarbonat-Formmassen, die Phosphor-Verbindungen mit einer ausgewählten Anzahl von Wiederholungseinheiten enthalten, das gewünschte Eigenschaftsprofil aufweisen.

Gegenstand der Erfindung sind thermoplastische Formmassen enthaltend
A) 40 bis 99, vorzugsweise 60 bis 98,5 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat von
B.1) 5 bis 95, vorzugsweise 30 bis 80 Gew.-% eines oder mehrerer Vinylmonomeren auf
B.2) 95 bis 5, vorzugsweise 20 bis 70 Gew.-% einer oder mehrerer Pfropfgrundlagen mit einer Glasumwandlungstemperatur <10°C, vorzugsweise <0°C, besonders bevorzugt < -20°C, wobei die Pfropfgrundlage eine mittlere Teilchengröße (d₅₀-Wert) von 0.1 bis 0.6 mm und der Gelanteil der Pfropfgrundlage mindestens 40 Gew.-% beträgt,
C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,
D) 0,5 bis 20 Gew.-Teilen, bevorzugt 1 bis 18 Gew.-Teilen, besonders bevorzugt 2 bis 16 Gew.-Teilen einer Phosphorverbindung der Formel (I) 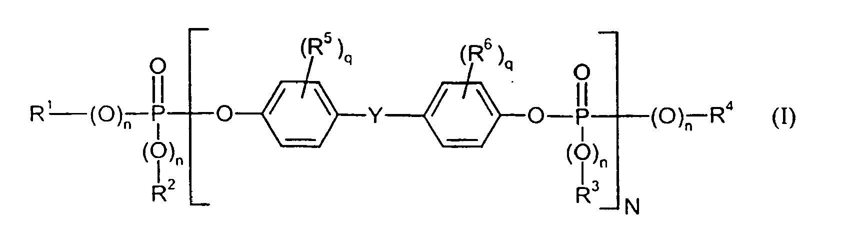 worin
   - R¹, R², R³ und R⁴,: unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
   - n: unabhängig voneinander 0 oder 1,
   - q: unabhängig voneinander 0, 1, 2, 3 oder 4,
   - N: 0,9 bis 1,7 insbesondere 1 bis 1,15 ist,
   - R⁵ und R⁶: unabhängig voneinander C₁-C₄-Alkyl, vorzugsweise Methyl oder Halogen, vorzugsweise Chlor und/oder Brom bedeuten,
   - Y: Isopropyliden, C₅-C₁₂-Cycloalkylen, C₅-C₁₂-Cycloalkyliden, -O-, -S-, -SO-, -SO₂- oder -CO- bedeutet.
E) 0.05 bis 3, vorzugsweise 0,05 bis 2, besonders bevorzugt 0,1 bis 0,8 gew.-Teile, fluoriertes Polyolefin.

Bevorzugt enthalten die thermoplastischen Formmassen 0,5 bis 20, besonders bevorzugt 1 bis 18 und insbesondere 2 bis 16 Gew.-Teile Phosphor-Verbindung (I) oder eine Mischung von Phosphor-Verbindungen (I).

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (III) 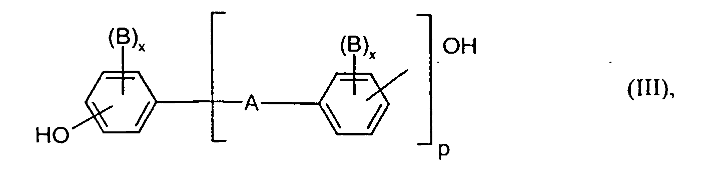 wobei
- A: eine Einfachbindung, C₁-C₅-Alkylen, C₂-C₅-Alkyliden, C₅-C₆-Cycloalkyliden, -O-, -SO-, -CO-, -S-, -SO₂- C₆-C₁₂-Arylen, an das weitere aromatische gegebenenfalls Heteroatome enthaltende Ringe kondensiert sein können,
oder ein Rest der Formel (IV) oder (V) 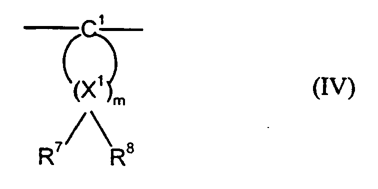 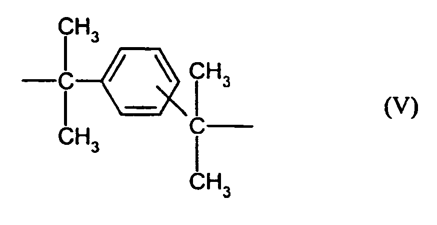
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁷ und R⁸: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁷ und R⁸ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfaßt ein oder mehrere Pfropfpolymerisate von
B.1 5 bis 95, vorzugsweise 30 bis 80 Gew.-%, wenigstens eines Vinylmonomeren auf
B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.
   Die Pfropfgrundlage B.2 hat eine mittlere Teilchengröße (d₅₀₋Wert) von 0,05 bis 5 µm, vorzugsweise 0,10 bis 0,6 µm, besonders bevorzugt 0,1 bis 0,5, ganz besonders bevorzugt 0,20 bis 0,40 µm.

Monomere B.1 sind vorzugsweise Gemische aus
B.1.1 50 bis 99 Gew.-Teilen Vinylaromaten und/oder kemsubstituierten Vinylaromaten (wie beispielsweise Styrol, α-Methylstyrol, p-Methylstyrol, p-Chlorstyrol) und/oder (Meth)Acrylsäure-(C₁-C₈)-Alkylester (wie z.B. Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb <10°C, vorzugsweise <0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation oder Massepolymerisation hergestellt.

Besonders geeignete Pfropfkautschuke sind auch ABS-Polymerisate, die durch Redox-Initiierung mit einem Initiatorsystem aus organischem Hydroperoxid, Cumolhydroperoxid oder t-Butylhydroperoxid und Ascorbinsäure, gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vemetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁₋C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfaßt ein oder mehrere thermoplastische Vinyl (co)polymerisate C. und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder (Meth)Acrylsäure-(C₁-C₈)-Alkylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁₋C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte M̅_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bemsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die erfindungsgemäßen Formmassen enthalten als Flammschutzmittel Phosphorverbindungen gemäß Formel (I), 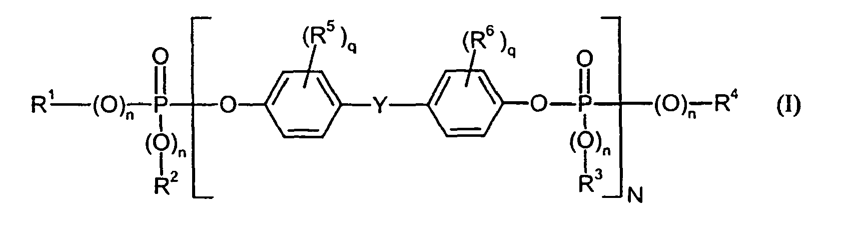 in der die Reste die o.g. Bedeutungen haben.

Die erfindungsgemäß geeigneten Phosphorverbindungen gemäß Komponente D sind generell bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beistein, Bd. 6, S. 177).

Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁-C₄₋Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für Isopropyliden.

n in der Formel (I) kann unabhängig voneinander 0 oder 1 sein, vorzugsweise ist n gleich 1.

q kann 0, 1, 2, 3 oder 4 sein, vorzugsweise ist q 0, 1 oder 2.

N kann Werte von 0,5 bis 4, vorzugsweise 0,9 bis 2,5, insbesondere 1 bis 1,15 annehmen. Als erfindungsgemäße Komponente D können auch Mischungen verschiedener Phosphate eingesetzt werden. In diesem Fall ist N ein Durchschnittswert. In diesem Gemisch können auch Monophosphorverbindungen (N=0) enthalten sein.

Die mittleren N-Werte können bestimmt werden in dem mittels geeigneter Methode (Gaschromatographie (GC), High Pressure Liquid Chromatography (HPLC), Gelpermcationschromatographie (GPC)) die Zusammensetzung der Phosphat-Mischung (Molekulargewichtsverteilung) bestimmt wird und daraus die Mittelwerte für N berechnet werden.

### Komponente E

Als weitere Komponente können fluorierte Polyolefine zugesetzt werden.

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³. Bevorzugte fluorierte Polyolefine E sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modem Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E mit Emulsionen der Pfropfpolymerisate B eingesetzt. Geeignete Tetrafluorethylenpolymerisat-Emulsionen sind handelsübliche Produkte und werden beispielsweise von der Firma DuPont als Teflon® 30 N angeboten.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm³ bis 2,3 g/cm³ und werden von den Firmen DuPont als Teflon und Dyneon GmbH, (Burgkirchen, Deutschland) unter dem Handelsnamen Hostaflon® PTFE angeboten.

Die erfindungsgemäßen Formmassen können weingstens eines der üblichen Additive, wie Gleit- und Entformungsmittel, beispielsweise Pentaerythrittetrastearat, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt. Als Flammschutzmittel können weiterhin auch Monophosphatverbindungen, oligomere Phosphatverbindungen oder Mischungen daraus eingesetzt werden. Solche Phosphorverbindungen sind in EP-A 363 608, EP-A 345 522 und DE-OS 197 21 628 beschrieben.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entforinungsmitteln, Nukleiermittel sowie Antistatika, Füll- und Verstärkungsstoffe werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die erfindungsgemäßen thermoplastischen Formmassen eignen sich aufgrund ihrer ausgezeichneten Flammfestigkeit, insbesondere der kurzen Nachbrennzeit, und ihrer guten mechanischen Eigenschaften und ihre hohe Wärmeformbeständigkeit zur Herstellung von Formkörpern jeglicher Art, insbesondere solchen mit erhöhten Anforderungen an mechanischen Eigenschaften.

Die Formmassen der vorliegenden Erfindung können zur Herstellung von Formkörpem jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:
- 1.: Innenausbauteile für Schienenfahrzeuge
- 2.: Radkappen
- 3.: Gehäuse von Kleintransformatoren enthaltenden Elektrogeräten
- 4.: Gehäuse für Geräte zur Informationsverbreitung und -Übermittlung
- 5.: Gehäuse und Verkleidung für medizinische Zwecke
- 6.: Massagegeräte und Gehäuse dafür
- 7.: Spielfahrzeuge für Kinder
- 8.: Flächige Wandelemente
- 9.: Gehäuse für Sicherheitseinrichtungen
- 10.: Heckspoiler
- 11.: Wärmeisolierte Transportbehältnisse
- 12.: Vorrichtung zur Haltung oder Versorgung von Kleintieren
- 13.: Formteile für Sanitär- und Badeausrüstungen
- 14.: Abdeckgitter für Lüfteröffnungen
- 15.: Formteile für Garten- und Gerätehäuser
- 16.: Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Polycarbonat auf Basis Bisphenol A mit einer relativen Lösungsviskosität von 1,255, gemessen in Methylenchlorid bei 25°C und in einer Konzentration von 0,5 g/100 ml.

### Komponente B

### B.1:

Pfropfpolymerisat von 40 Gew.-Teilen Styrol und Acrylnitril im Verhältnis von 73:27 auf 60 Gew.-Teile teilchenförmigen vernetzten Polybutadienkautschuk (mittlerer Teilchendurchmesser d₅₀ = 0,28µm), hergestellt durch Emulsionspolymerisation unter Verwendung eines Redoxinitiators aus t-Butylhydroperoxid und Ascorbinsäure.

### B.2: Silikonpfropfkautschuk

### 1. Herstellung der Silikonkautschuk-Emulsion

38,4 Gew.-Teile Octamethylcyclotetrasiloxan, 1,2 Gew.-Teile Tetramethyltetravinylcyclotetrasiloxan und 1 Gew.-Teil Mercaptopropylmethyldimethoxysilan werden miteinander verrührt. 0,5 Gew.-Teile Dodecylbenzolsulfonsäure werden zugefügt, anschließend 58,4 Gew.-Teile Wasser innerhalb einer Stunde zugegeben. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure hinzu. Die Emulsion wird 2 Stunden bei 85°C und anschließend 36 Stunden bei 20°C gerührt. Neutralisiert wird mit Hilfe von 5n-NaOH. Es resultiert eine stabile Emulsion mit einem Feststoffgehalt von ca. 36 Gew.-%. Das Polymer besitzt einen Gelgehalt von 82 Gew.-%, gemessen in Toluol; der mittlere Teilchendurchmesser d₅₀ beträgt 300 nm.

### 2. Herstellung des gepfropften Silikonkautschuks

In einem Reaktor werden vorgelegt:
2107 Gew.-Teile Latex gemäß 1) und
1073 Gew.-Teile Wasser.

Nach Initiierung mit einer Lösung von 7,5 Gew.-Teilen Kaliumperoxydisulfat in 195 Gew.-Teilen Wasser bei 65°C werden jeweils folgende Lösungen zur Herstellung des Pfropfkautschukes innerhalb von 4 Stunden gleichmäßig eingespeist:
- Lösung 1:: 540 Gew.-Teile Styrol und
210 Gew.-Teile Acrylnitril;
- Lösung 2:: 375 Gew.-Teile Wasser und
15 Gew.-Teile Natriumsalz von C₁₄-C₁₈-Alkylsulfonsäuren.

Anschließend wird jeweils innerhalb von 6 Stunden bei 65°C auspolymerisiert. Es resultiert ein Latex mit einem Feststoffgehalt von ca. 33 Gew.-%.

Nach Koagulation mit einer wäßrigen Magnesiumchlorid/Essigsäurelösung, Filtration und Trocknung im Vakuum werden die Pfropfpolymerisate in Form weißer Pulver erhalten.

### B.3: Acrylatpfropfkautschuk

Pfropfpolymerisat von 40 Gew.-Teilen eines Copolymerisates aus Styrol und Acrylnitril im Verhältnis von 72:28 auf 60 Gew.-Teile teilchenförmigen vernetzten Polyacrylatkautschuk (mittlerer Teilchendurchmesser d₅₀ = 0,5 µm) hergestellt durch Emulsionspolymerisation.

### B.4: EPDM-Pfropflcautschuk

Pfropfpolymerisat von 50 Gew.-Teilen eines Copolymerisats aus Styrol und Acrylnitril im Verhältnis von 72:28 auf 50 Gew.-Teile vernetzten EPDM-Kautschuk der Fa. Uniroyal Chemical Company, Handelsname Royaltuf 372 P20.

### Komponente C

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente D

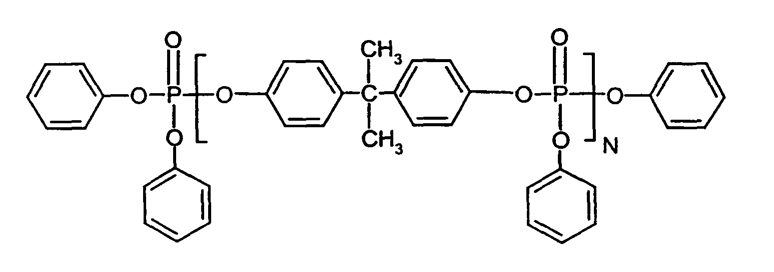

- D.1: N = 0,5
- D.2: N = 0,8
- D.3: N = 1,06
- D.4: N = 1,10
- D.5: N = 1,13
- D.6: N = 1,7

Zur Bestimmung des mittleren N-Wertes werden zuerst die Anteile der monomeren und oligomeren Phosphate durch HPLC-Messungen bestimmt:
Säulentyp: LiChrosorp RP-8
Elutionsmittel im Gradienten:
Acetonitril/Wasser 50:50 bis 100:0
Konzentration 5 mg/ml

Aus den Anteilen der einzelnen Komponenten Mono- und Oligophosphate werden dann nach bekannten Verfahren die zahlengewichteten Mittelwerte berechnet.

### Komponente E

Teflon® 30N der Firma DuPont, Wilmington, Delaware, U.S.A.

### Herstellung und Prüfung der erfindungsgemäßen Formmassen

Das Mischen der Komponenten mit den üblichen Verarbeitungshilfsmitteln erfolgt auf einem Doppelwellenextruder ZSK 32. Die Formkörper werden auf einer Spritzgußmaschine Typ Arburg 270E bei 260°C hergestellt.

Die Bestimmung der Wärmeformbeständigkeit nach Vicat B erfolgt gemäß DIN 53 460 an Stäben der Abmessung 80 x 10 x 4 mm.

Die Bestimmung der Fließnahtfestigkeit erfolgt nach DIN 53 453.

Die Bestimmung der Zugfestigkeit erfolgt nach ISO 527/DIN 53 457.

Die Flammwidrigkeit wird nach UL94V bestimmt.

**Tabelle 1 Zusammensetzung und Eigenschaften der Formmassen**

| | 1 Vergleich | 2 | 3 | 4 | 5 | 6 | 7 | 8 | 9 |
|---|---|---|---|---|---|---|---|---|---|
| **Komponenten [Gew.-Tle.]** | | | | | | | | | |
| A | 68,4 | 68,4 | 68,4 | 68,4 | 68,4 | 68,4 | 68,4 | 68,4 | 68,4 |
| B.1 | 10,6 | 10,6 | 10,6 | 10,6 | 10,6 | 10,6 | | | |
| B.2 | 10,6 | | | | | | 10,6 | | |
| B.3 | 10,6 | | | | | | | 10,6 | |
| B.4 | 10,6 | | | | | | | | 10,6 |
| C | 9,3 | 9,3 | 9,3 | 9,3 | 9,3 | 9,3 | 9,3 | 9,3 | 9,3 |
| D.1 (Vergleich) | 12,0 | - | - | - | - | - | | | |
| D.2 | - | 12,0 | - | - | - | - | | | |
| D.3 | - | - | 12,0 | - | - | - | 12,0 | 12,0 | 12,0 |
| D.4 | - | - | - | 12,0 | - | - | | | |
| D.5 | - | - | - | - | 12,0 | - | | | |
| D.6 | - | - | - | - | - | 12,0 | | | |
| E | 0,4 | 0,4 | 0,4 | 0,4 | 0,4 | 0,4 | 0,4 | 0,4 | 0,4 |
| PETS* | 0,4 | 0,4 | 0,4 | 0,4 | 0,4 | 0,4 | 0,4 | 0,4 | 0,4 |
| | | | | | | | | | |

| **Eigenschaften** | | | | | | | | | |
|---|---|---|---|---|---|---|---|---|---|
| Vicat B 120 [°C] | 93 | 98 | 102 | 103 | 104 | 106 | 102 | 103 | 103 |
| Zugfestigkeit (N/mm²] | 54,2 | 57,8 | 58,0 | 58,3 | 58,5 | 55,5 | 57,5 | 58,7 | 58,3 |

| UL 94 V 1,6 mm | | | | | | | | | |
|---|---|---|---|---|---|---|---|---|---|
| Gesamtnachbrennzeit [s] | 21 | 28 | 36 | 36 | 38 | 65 | 20 | 35 | 38 |
| Bewertung | V-0 | V-0 | V-0 | V-0 | V-0 | V-1 | VO | VO | VO |
| Fließnahtfestigkeit auf [kJ/m²] | 5,8 | 6,2 | 7,9 | 8,6 | 8,8 | 8,3 | 7,3 | 9,4 | 9,0 |

| | | | | | | | | | |
|---|---|---|---|---|---|---|---|---|---|
| * PETS = Pentacryrithrittetrastearat | | | | | | | | | |

Aus der Tabelle 1 wird deutlich, daß nur die erfindungsgemäßen Formmassen eine optimale Eigenschaftskombination aus Wärmeformbeständigkeit, Zug-E-Modul, Fließverhalten und Flammschutz aufweisen. Besitzen die als Flammschutzmittel eingesetzten Phosphate niedrigere Kondensationsgrade, so ist zwar Fließverhalten und Flammschutz günstiger, Wärmeformbeständigkeit und Fließnahtfestigkeit erreichen jedoch nicht das für viele Anwendungen geforderte Niveau.

## Patentansprüche

1. Mit Pfropfpolymerisat modifizierte thermoplastische Polycarbonat-Formmasse enthaltend
A) 40 bis 99 Gew.-Teile aromatisches Polycarbonat und/oder Polyestercarbonat,
B) 0,5 bis 60 Gew.-Teile Pfropfpolymerisat von
B.1) 5 bis 95 Gew.-% eines oder mehrerer Vinylmonomeren auf
B.2) 95 bis 5 Gew.-% einer oder mehrerer Pfropfgrundlagen mit einer Glasumwandlungstemperatur <10°C, wobei die Pfropfgrundlage eine mittlere Teilchengröße (d₅₀-Wert) von 0,1 bis 0,6 µm und der Gelanteil der Pfropfgrundlage mindestens 40 Gew.-% beträgt,
C) 0 bis 45 Gew.-Teile mindestens eines thermoplastischen Polymers, ausgewählt aus der Gruppe der Vinyl(co)polymerisate und Polyalkylenterephthalate,
D) 0,5 bis 20 Gew.-Teilen einer Phosphorverbindung der Formel (I) oder einer Mischung von Phosphor-Verbindungen (I) 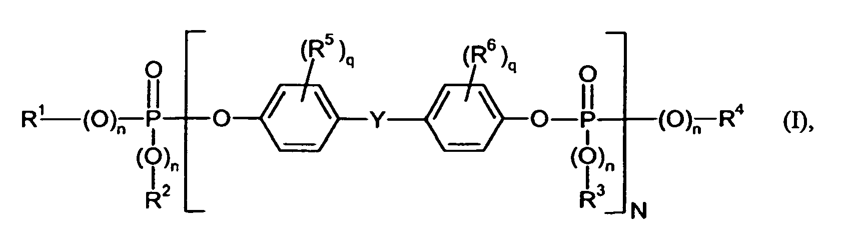 worin
R¹, R², R³ und R⁴ unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
N 0,9 bis 1,7 bedeuten,
R⁵ und R⁶ unabhängig voneinander C₁-C₄-Alkyl oder Halogen bedeuten,
Y Isopropyliden, C₅-C₁₂-Cycloalkylen, C₅-C₁₂-Cycloalkyliden, -O-, -S-, -SO- oder -CO- bedeutet,
und
E) 0,05 bis 3 Gew.-Teile fluoriertes Polyolefin.

2. Formmasse gemäß Anspruch 1, enthaltend 1 bis 18 Gew.-Teile Phosphor-Verbindung (I) oder eine Mischung von Phosphor-Verbindungen (I).

3. Formmasse gemäß Anspruch 1, enthaltend 2 bis 16 Gew.-Teile Phosphor-Verbindung (I) oder eine Mischung von Phosphor-Verbindungen (I).

4. Formmasse nach Anspruch 1 bis 3, wobei N in Formel (I) 1 bis 1,7 bedeutet.

5. Formmasse nach Anspruch 1 bis 3, wobei N in Formel (I) 1,06 bis 1,7 bedeutet.

6. Formmasse nach Anspruch 1 bis 3, wobei N in Formel (I) 1,06 bis 1,15 bedeutet.

7. Formmassen nach einem der vorhergehenden Ansprüche, wobei R¹, R², R³ und R⁴ in Formel (I) für Phenyl steht.

8. Formmassen nach einem der vorhergehenden Ansprüche, wobei Y in Formel (I) für Isopropyliden steht.

9. Formmasse nach einem der vorhergehenden Ansprüche, enthaltend 1 bis 40 Gew.-Teile Pfropfpolymerisat.

10. Formmasse nach Anspruch 1, enthaltend B.1 aus
50 bis 95 Gew.-Teilen Styrol, α-Methylstyrol, halogen- oder alkylkernsubstituiertem Styrol, C₁-C₈-Alkylinethacrylat, C₁-C₈-Alkylacrylat oder Mischungen dieser Verbindungen und
5 bis 50 Gew.-Teilen Acrylnitril, Methacrylnitrl, C₁-C₈-Alkylmethacrylat, C₁₋C₈-Alkylacrylat, Maleinsäureanhydrid, C₁-C₄-alkyl- bzw. phenyl-N-substituiertem Maleinimid oder Mischungen dieser Verbindungen.

11. Formmassen nach einem der vorhergehenden Ansprüche, enthaltend als Pfropfgrundlage B.2 einen Dienkautschuk, Acrylatkautschuk, Silikonkautschuk oder Ethylen-Propylen-Dien-Kautschuk oder Mischungen davon.

12. Formmasse gemäß Anspruch 11, wobei die Pfropfgrundlage eine mittlere Teilchengröße (d₅₀-Wert) von 0,1 bis 0,5 µm beträgt.

13. Formmasse gemäß Anspruch 12, wobei die Pfropfgrundlage eine mittlere Teilchengröße (d₅₀-Wert) von 0,2 bis 0,4 µm beträgt.

14. Formmassen nach einem der Ansprüche 1 bis 13, wobei sie mindestens einen Zusatz aus der Gruppe der Stabilisatoren, Pigmente, Entformungsmittel, Fließhilfsmittel und/oder Antistatika, Füll- und Verstärkungsstoffe enthalten.

15. Formmasse gemäß Anspruch 1 bestehend aus
A) 40 bis 99 Gew.-Teile aromatisches Polycarbonat und/oder Polyestercarbonat,
B) 0,5 bis 60 Gew.-Teile Pfropfpolymerisat von
B.1) 5 bis 95 Gew.-% eines oder mehrerer Vinylmonomeren auf
B.2) 95 bis 5 Gew.-% einer oder mehrerer Pfropfgrundlagen mit einer Glasumwandlungstemperatur <10°C, wobei die Pfropfgrundlage eine mittlere Teilchengröße (d₅₀-Wert) von 0,1 bis 0,6 µm und der Gelanteil der Pfropfgrundlage mindestens 40 Gew.-% beträgt,
C) 0 bis 45 Gew.-Teile mindestens eines thermoplastischen Polymers, ausgewählt aus der Gruppe der Vinyl(co)polymerisate und Polyalkylenterephthalate,
D) 0,5 bis 20 Gew.-Teilen einer Phosphorverbindung der Formel (I) oder einer Mischung von Phosphor-Verbindungen (I),
E) 0,05 bis 3 Gew.-Teile fluoriertes Polyolefin, und
F) mindestens einen Zusatz aus der Gruppe der Stabilisatoren, Pigmente, Entformungsmittel, Fließhilfsmittel und/oder Antistatika.

16. Verwendung der Formmassen nach einem der vorhergehenden Ansprüche zur Herstellung von Formkörpern.

17. Formkörper, erhältlich aus Formmassen nach einem der vorhergehenden Ansprüche.

## Claims

1. Graft polymer-modified thermoplastic polycarbonate moulding compositions containing
A) 40 to 99 parts by weight of aromatic polycarbonate and/or polyester carbonate
B) 0.5 to 60 parts by weight of graft polymer of
B.1) 5 to 95 wt.% of one or more vinyl monomers on
B.2) 95 to 5 wt.% of one or more grafting backbones having a glass transition temperature of <10°C, wherein the grafting backbone has an average particle size (d₅₀ value) of 0.1 to 0.6 µm and the gel content of the grafting backbone is at least 40 wt.%
C) 0 to 45 parts by weight of at least one thermoplastic polymer selected from the group comprising vinyl (co)polymers and polyalkylene terephthalates,
D) 0.5 to 20 parts by weight of a phosphorus compound of the formula (I) or of a mixture of phosphorus compounds (I) 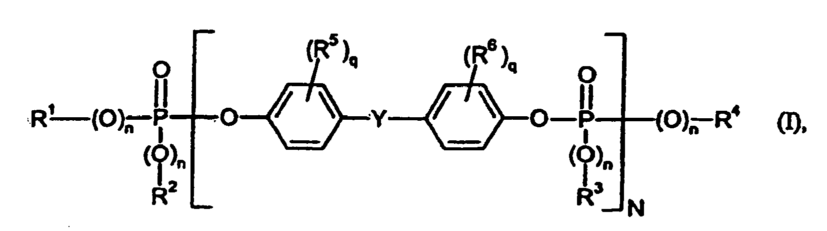 in which
R¹, R², R³ and R⁴ are mutually independently C₁-C₈ alkyl, optionally substituted by halogen, C₅-C₆ cycloalkyl, C₆-C₁₀ aryl or C₇-C₁₂ aralkyl, each optionally substituted by halogen and/or alkyl,
n mutually independently mean 0 or 1,
q mutually independently mean 0, 1, 2, 3 or 4,
N means 0.9 to 1.7,
R⁵ and R⁶ mutually independently mean C₁-C₄ alkyl or halogen,
Y means isopropylidene, C₅-C₁₂ cycloalkylene, C₅-C₁₂ cycloalkylidene, -O-, -S-, -SO- or -CO-
and
E) 0.05 to 3 parts by weight of fluorinated polyolefin.

2. Moulding composition according to claim 1, containing 1 to 18 parts by weight of phosphorus compound (I) or a mixture of phosphorus compounds (I).

3. Moulding composition according to claim 1, containing 2 to 16 parts by weight of phosphorus compound (I) or a mixture of phosphorus compounds (I).

4. Moulding composition according to claims 1 to 3, wherein N in the formula (I) means 1 to 1.7.

5. Moulding composition according to claims 1 to 3, wherein N in the formula (I) means 1.06 to 1.7.

6. Moulding composition according to claims 1 to 3, wherein N in the formula (I) means 1.06 to 1.15.

7. Moulding composition according to one of the preceding claims, wherein R¹, R², R³ and R⁴ in the formula (I) denote phenyl.

8. Moulding compositions according to one of the preceding claims, wherein Y in the formula (I) denotes isopropylidene.

9. Moulding composition according to one of the preceding claims, containing 1 to 40 parts by weight of graft polymer.

10. Moulding composition according to claim 1 containing B.1 of
50 to 95 parts by weight of styrene, α-methylstyrene, halo- or alkyl-ring-substituted styrene, C₁-C₈ alkyl methacrylate, C₁-C₈ alkyl acrylate or mixtures of these compounds and
5 to 50 parts by weight of acrylonitrile, methacrylonitrile, C₁-C₈ alkyl methacrylate, C₁-C₈ alkyl acrylate, maleic anhydride, C₁-C₄ alkyl- or phenyl-N-substituted maleimide or mixtures of these compounds.

11. Moulding compositions according to one of the preceding claims, containing a diene rubber, acrylate rubber, silicone rubber or ethylene/propylene/diene rubber or mixtures thereof as the grafting backbone B.2.

12. Moulding composition according to claim 11, wherein the grafting backbone has an average particle size (d₅₀ value) of 0.1 to 0.5 µm.

13. Moulding composition according to claim 12, wherein the grafting backbone has an average particle size (d₅₀ value) of 0.2 to 0.4 µm.

14. Moulding compositions according to one of claims 1 to 13, wherein they contain at least one addition from the group comprising stabilisers, pigments, mould release agents, flow auxiliaries and/or antistatic agents, fillers and reinforcing materials.

15. Moulding composition according to claim 1 consisting of
A) 40 to 99 parts by weight of aromatic polycarbonate and/or polyester carbonate
B) 0.5 to 60 parts by weight of graft polymer of
B.1) 5 to 95 wt.% of one or more vinyl monomers on
B.2) 95 to 5 wt.% of one or more grafting backbones having a glass transition temperature of <10°C, wherein the grafting backbone has an average particle size (d₅₀ value) of 0.1 to 0.6 µm and the gel content of the grafting backbone is at least 40 wt.%
C) 0 to 45 parts by weight of at least one thermoplastic polymer selected from the group comprising vinyl (co)polymers and polyalkylene terephthalates,
D) 0.5 to 20 parts by weight of a phosphorus compound of the formula (I) or of a mixture of phosphorus compounds (I)
E) 0.05 to 3 parts by weight of fluorinated polyolefin, and
F) at least one addition from the group comprising stabilisers, pigments, mould release agents, flow auxiliaries and/or antistatic agents.

16. Use of the moulding compositions according to one of the preceding claims for the production of mouldings.

17. Mouldings obtainable from moulding compositions according to one of the preceding claims.

## Revendications

1. Matières à mouler thermoplastiques en polycarbonate modifiées par un polymère greffé, contenant
A) 40 à 99 parties en poids d'un polycarbonate et/ou polyestercarbonate aromatique,
B) 0,5 à 60 parties en poids d'un polymère greffé de
B.1) 5 à 95 % en poids d'un ou plusieurs monomères vinyliques sur
B.2) 95 à 5 % en poids d'un ou plusieurs supports de greffage à une température de transition du second ordre inférieure à 10°C, le support de greffage ayant une dimension de particule moyenne (valeur d₅₀) de 0,1 à 0,6 µm et une teneur en gel d'au moins 40 % en poids,
C) 0 à 45 parties en poids d'au moins un polymère thermoplastique choisi dans le groupe des (co)polymères vinyliques et des téréphtalates de polyalkylène,
D) 0,5 à 20 parties en poids d'un dérivé du phosphore répondant à la formule (I) ou d'un mélange de dérivés du phosphore répondant à la formule (I) 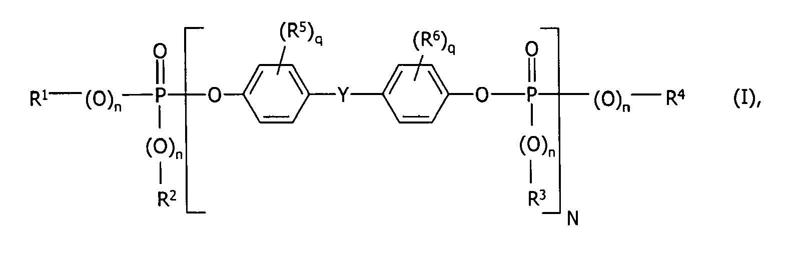 dans laquelle
R¹, R², R³ et R⁴ représentent chacun, indépendamment les uns des autres, un groupe alkyle en C₁-C₈ éventuellement substitué par des halogènes, un groupe cycloalkyle en C₅-C₆, aryle en C₆-C₁₀ ou aralkyle en C₇-C₁₂, chacun d'eux éventuellement substitué par des halogènes et/ou des groupes alkyle,
les indices n sont égaux chacun, indépendamment les uns des autres, à 0 ou 1,
Les indices q sont égaux chacun, indépendamment les uns des autres, à 0, 1, 2, 3 ou 4,
N est un nombre allant de 0,9 à 1,7, plus spécialement de 1 à 1,15,
R⁵ et R⁶ représentent chacun, indépendamment l'un de l'autre, un groupe alkyle en C₁-C₄ ou un halogène,
Y représente un groupe isopropylidène, cycloalkylène en C₅-C₁₂, cycloalkylidène en C₅-C₁₂, -O-, -S-, -SO- ou -CO-,
et
E) 0,05 à 3 parties en poids d'une polyoléfine fluorée.

2. Matière à mouler selon la revendication 1, contenant 1 à 18 parties en poids du dérivé de phosphore (I) ou d'un mélange de dérivés du phosphore (I).

3. Matière à mouler selon la revendication 1, contenant 2 à 16 parties en poids d'un dérivé de phosphore (I) ou d'un mélange de dérivés du phosphore (I).

4. Matière à mouler selon les revendications 1 à 3, pour laquelle N de la formule (I) est un nombre allant de 1 à 1,7.

5. Matière à mouler selon les revendications 1 à 3, pour laquelle N de la formule (I) est un nombre allant de 1,06 à 1,7.

6. Matière à mouler selon les revendications 1 à 3, pour laquelle N de la formule (I) est un nombre allant de 1,06 à 1,15.

7. Matières à mouler selon l'une des revendications qui précèdent, pour lesquelles R¹, R², R³ et R⁴ de la formule (I) représentent des groupes phényle.

8. Matières à mouler selon l'une des revendications qui précèdent, pour lesquelles Y de la formule (I) représente un groupe isopropylidène.

9. Matière à mouler selon l'une quelconque des revendications qui précèdent, contenant 1 à 40 parties en poids de polymère greffé.

10. Matière à mouler selon la revendication 1, contenant B.1 qui consiste lui même en
50 à 95 parties en poids de styrène, d'α-méthylstyrène, d'un styrène substitué par des halogènes ou des groupes alkyle, d'un méthacrylate d'alkyle en C₁-C₈, d'un acrylate d'alkyle en C₁-C₈ ou de mélanges de ces composés et
5 à 50 parties en poids d'acrylonitrile, de méthacrylonitrile, d'un méthacrylate d'alkyle en C₁-C₈, d'un acrylate d'alkyle en C₁-C₈, d'anhydride maléique, d'un maléimide substitué à l'azote par un groupe alkyle en C₁-C₄ ou par un groupe phényle, ou de mélanges de ces composés.

11. Matières à mouler selon l'une des revendications qui précèdent, contenant en tant que support de greffage B.2, un caoutchouc diénique, un caoutchouc d'acrylate, un caoutchouc de silicone, un caoutchouc d'éthylène-propylène-diène ou un mélange de tels caoutchoucs.

12. Matière à mouler selon la revendication 11, dans laquelle le support de greffage a un diamètre de particule moyen (valeur d₅₀) de 0,1 à 0,5 µm.

13. Matière à mouler selon la revendication 12, pour laquelle le support de greffage a un diamètre de particule moyen (valeur d₅₀) de 0,2 à 0,4 µm.

14. Matières à mouler selon l'une des revendications 1 à 13, contenant au moins un additif du groupe des stabilisants, des pigments, des agents de démoulage, des produits auxiliaires fluidifiants et/ou des agents antistatiques, des matières de charge et matières renforçantes.

15. Matière à mouler selon la revendication 1, consistant en
A) 40 à 99 parties en poids d'un polycarbonate et/ou polyestercarbonate aromatique,
B) 0,5 à 60 parties en poids d'un polymère greffé de
B.1) 5 à 95 % en poids d'un ou plusieurs monomères vinyliques sur
B.2) 95 à 5 % en poids d'un ou plusieurs supports de greffage ayant une température de transition du second ordre inférieure à 10°C, le support de greffage ayant un diamètre de particule moyen (valeur d₅₀) de 0,1 à 0,6 µm et une teneur en gel d'au moins 40 % en poids,
C) 0 à 45 parties en poids d'au moins un polymère thermoplastique choisi dans le groupe des (co)polymères vinyliques et des téréphtalates de polyalkylène,
D) 0,5 à 20 parties en poids d'un dérivé du phosphore répondant à la formule (I) ou d'un mélange de dérivés du phosphore répondant à la formule (I).
E) 0,05 à 3 parties en poids d'une polyoléfine fluorée et
F) au moins un additif du groupe des stabilisants, des pigments, des agents de démoulage, des produits auxiliaires fluidifiants et/ou des agents antistatiques.

16. Utilisation des matières à mouler selon l'une des revendications qui précèdent pour la fabrication d'objets moulés.

17. Objets moulés obtenus à partir des matières à mouler selon l'une des revendications qui précèdent.
